(19)

**Europäisches Patentamt**
**European Patent Office**
**Office européen des brevets**

(11) **EP 4 023 523 B1**

(12) **EUROPEAN PATENT SPECIFICATION**

(45) Date of publication and mention
of the grant of the patent:
**08.07.2026 Bulletin 2026/28**

(21) Application number: **21218495.6**

(22) Date of filing: **31.12.2021**

(51) International Patent Classification (IPC):
**G01C 21/36** (2006.01) **B60W 30/18** (2012.01)
**G05D 1/65** (2024.01)

(52) Cooperative Patent Classification (CPC):
**G01C 21/3602; B60W 30/17; B60W 30/181;**
**B60W 30/18154; G08G 1/052; G08G 1/09623;**
**G08G 1/09626;** B60W 2554/802; B60W 2555/60;
B60W 2720/10; B60W 2720/103

(54) **VEHICLE CONTROL SYSTEM**

FAHRZEUGSTEUERUNGSSYSTEM

SYSTÈME DE COMMANDE DE VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **05.01.2021 GB 202100063**

(43) Date of publication of application:
**06.07.2022 Bulletin 2022/27**

(73) Proprietors:
• **Nissan Motor Manufacturing (UK) Limited**
**Cranfield, Bedfordshire MK43 0DB (GB)**
• **Renault s.a.s**
**92100 Boulogne Billancourt (FR)**

(72) Inventor: **SHAH, Nirav**
**Cranfield, MK43 0DB (GB)**

(56) References cited:
EP-A1- 3 220 226      EP-A1- 3 584 135
WO-A1-2020/193295    CN-A- 111 123 952

• PARK CHANGHYEON ET AL: "Implementation of Autonomous Driving Vehicle at an Intersection with Traffic Light Recognition and Vehicle Controls :", PROCEEDINGS OF THE 5TH INTERNATIONAL CONFERENCE ON VEHICLE TECHNOLOGY AND INTELLIGENT TRANSPORT SYSTEMS, 1 January 2019 (2019-01-01), pages 542 - 549, XP093190969, DOI: 10.5220/0007760905420549

# Description

## TECHNICAL FIELD

The present disclosure relates to a control system of a vehicle. Aspects of the invention relate to a control system, to a computer program, to a computer-readable data carrier, to a vehicle, and to a method of operating the vehicle.

## BACKGROUND

Modern vehicles are known to feature Advanced Driver Assistance Systems (ADAS) for assisting the driver in a variety of driving scenarios by providing some automated control of the vehicle. For example, some ADAS are configured to electronically control the direction of travel, or steering, of the vehicle and/or the speed of the vehicle in suitable driving conditions.

Such ADAS are increasingly commonplace due to the technological developments in sensory technologies and the improved capabilities of on-board processing devices.

A challenge with automating control of the vehicle speed relates to the perceived driving experience and, particularly, to the comfort of the vehicle occupants when navigating a vehicle through a road junction, such as a roundabout.

EP 3584135 A1 discloses an autonomous driving system configured to obtain a driver's decision to reject a stopping route and pass through a target point instead. This is achieved by providing a trigger input request when the vehicle reaches a threshold proximity of the target point. The autonomous driving system therefore causes the vehicle to stop, without passing through the target point, in the absence of a trigger input or to pass through the target point when a trigger input from the driver is detected.

CN 111123952 A discloses a trajectory planning method for autonomous vehicles. The trajectory planning method obtains a target driving track comprising n road points, where each road point comprises coordinate information, transverse allowable error information and a drivable speed of the automatic driving vehicle.

It is an aim of the present invention to address one or more of the disadvantages associated with the prior art.

Reference is made to Park Changhyeon ET AL: "Implementation of Autonomous Driving Vehicle at an Intersection with Traffic Light Recognition and Vehicle Controls", which describes an autonomous driving vehicle system implemented at an intersection equipped with traffic lights. The system consists of a traffic light recognition, crossing/stop decision algorithm, vehicle localization, vehicle longitudinal/lateral control, and coordinate map generation.

## SUMMARY OF THE INVENTION

According to an aspect of the invention there is provided a method of controlling vehicle speed at a road junction. The method comprises: receiving a navigation path comprising: a series of trajectory points defining a route of the vehicle towards and through the road junction, wherein successive trajectory points are separated from one another by respective intervals; receiving a junction condition signal from a junction monitoring system of the vehicle; and if the junction condition signal is indicative that the vehicle should stop at the junction: identifying a stop point in the series of trajectory points for bringing the vehicle to a standstill at the road junction (or a stop line of the road junction); determining the proximity of the vehicle to the road junction based on the cumulative distance of the respective intervals between the successive trajectory points extending between the vehicle and the stop point; determining a vehicle speed profile for the vehicle based on the proximity of the vehicle to the road junction (or the stop line of the road junction), the vehicle speed profile being determined by: selecting a look-up table from a plurality of look-up tables, or selecting a pre-determined vehicle speed graph from a plurality of pre-determined vehicle speed graphs, based on the proximity of the vehicle to the road junction; and determining the vehicle speed profile based on the selected look-up table or pre-determined vehicle speed graph; and controlling the speed of the vehicle, as the vehicle travels along the route to the stop point, based on the vehicle speed profile.

In this manner, the method identifies a suitable trajectory point (in the series of trajectory points) for stopping the vehicle at a road junction and applies a vehicle speed profile, based on the proximity of the vehicle to the stop point, to decelerate the vehicle to a stand-still in a controlled manner, for example replicating a human-like braking profile. In this manner, the pre-determined vehicle speed graph/look-up table may be calibrated to provide a comfortable vehicle speed profile. In this manner, a harsher braking profile may be selected where the junction condition changes with the vehicle in relatively close proximity to the road junction.

Optionally, the method further comprises: if the junction condition signal changes, after the vehicle has travelled along a portion of the route, to indicate that the vehicle should proceed through the junction: re-determining the vehicle speed profile for the remaining portion of the route; and controlling the speed of the vehicle along the remaining portion of the route based on the vehicle speed profile. In this manner, the method provides for adaptive vehicle speed control in dependence on the junction condition signal. Advantageously, the speed control is therefore more human-like and comfortable for the vehicle passengers.

Optionally, successive trajectory points in the series of trajectory points are spaced at equal intervals from one another along the route.

Optionally, the vehicle speed profile is determined based (at least in part) on a road speed limit (e.g. received either from a navigation system and/or a traffic sign recognition system) and/or an acceleration/deceleration limit.

In an example, determining the vehicle speed profile comprises determining a target speed for the vehicle at each of the trajectory points arranged between the vehicle and the stop point. In this manner, the invention provides comprehensive vehicle speed control for the approach to the road junction.

Optionally, determining the target speed for the vehicle at each of the trajectory points arranged between the vehicle and the stop point comprises: determining the proximity to the stop point of each of those trajectory points that precede the stop point (m); and determining the target speed for the vehicle at each of those trajectory points that precede the stop point (m) based on the proximity of said trajectory point to the stop point. In this manner, the method makes advantageous use of the trajectory points to control the vehicle speed.

Optionally, determining the proximity of each trajectory point to the stop point comprises determining the cumulative distance of the intervals between the successive trajectory points extending between that trajectory point and the stop point. This provides for efficient determination of the proximity to the road junction using the determined trajectory points.

Optionally, the target speed for the vehicle at each of the trajectory points is determined by reading off a respective target speed value from the look-up table or the pre-determined vehicle speed graph based on the proximity of said trajectory point to the stop point. In this manner, the target speed value may be calibrated to provide a human-like driving experience, for example.

The junction condition signal may, for example, comprise information relating to at least one of: a signal output from a traffic light at the road junction (e.g. a stop signal or a proceed signal); a traffic status of the road junction; and/or a right of way of the vehicle for proceeding through the road junction. In this manner, the method is equipped to control the vehicle speed at a range of road junctions. For example, the junction condition signal may be indicative that the vehicle should stop at the junction if at least one of: the traffic light outputs a stop-signal; another vehicle approaching or crossing the road junction has the right of way; and/or road traffic obstructs the route of the vehicle through the road junction.

The junction condition signal may be indicative that the vehicle should proceed through the junction if at least one of: the traffic light outputs a proceed-signal; the vehicle has the right of way to proceed through the road junction; and/or the route of the vehicle through the road junction is unobstructed by road traffic.

According to another aspect of the invention there is provided a method of controlling a vehicle, comprising: monitoring a location of the vehicle; and controlling the speed of the vehicle according to the method described in a previous aspect of the invention in dependence on the location of the vehicle entering a road junction zone. In this manner, the vehicle speed control may be effectively activated upon entering a road junction zone, providing road junction specific control.

According to a further aspect of the invention there is provided a computer program comprising instructions which, when the program is executed by a computer, cause the computer to carry out the method described in either of the previous aspects of the invention.

According to yet another aspect of the invention there is provided a computer-readable data carrier having stored thereon the computer program described in a previous aspect of the invention.

According to a further aspect of the invention there is provided a control system for controlling the speed of a vehicle at a road junction, the control system comprising one or more controllers configured to: receive a navigation path from a navigation system of the vehicle, wherein the navigation path comprises: a series of trajectory points (1-n) defining a route of the vehicle towards and through the road junction, wherein successive trajectory points are separated from one another by respective intervals; receive a junction condition signal from a junction monitoring system of the vehicle; and if the junction condition signal is indicative that the vehicle should stop at the junction, the one or more controllers are configured to: identify a stop point (m) in the series of trajectory points (1-n) for bringing the vehicle to a standstill at the junction (or a stop line of the road junction); determine the proximity of the vehicle to the road junction based on the cumulative distance of the respective intervals between the successive trajectory points extending between the vehicle and the stop point; determine a vehicle speed profile for the vehicle based on the proximity of the vehicle to the road junction (or the stop line of the road junction), the vehicle speed profile being determined by: selecting a look-up table from a plurality of look-up tables, or selecting a pre-determined vehicle speed graph from a plurality of pre-determined vehicle speed graphs, based on the proximity of the vehicle to the road junction; and determining the vehicle speed profile based on the selected look-up table or pre-determined vehicle speed graph; and output one or more control signals, based on the vehicle speed profile, to control the speed of the vehicle as the vehicle travels along the route to the stop point.

Optionally, if the junction condition signal changes, after the vehicle has travelled along a portion of the route, to indicate that the vehicle should proceed through the junction, the one or more controllers are further configured to: re-determine the vehicle speed profile for a remaining portion of the route; and output one or more control signals based on vehicle speed profile to control the speed of the vehicle along a remaining portion of the route.

According to a further aspect of the invention there is provided a vehicle comprising a computer program as described in a previous aspect of the invention, a computer-readable data carrier as described in another previous aspect of the invention, and/or a control system as described in a further previous aspect of the invention.

**BRIEF DESCRIPTION OF THE DRAWINGS**

One or more embodiments of the invention will now be described, by way of example only, with reference to the accompanying drawings, in which:

Figure 1 shows an illustration of an example vehicle in accordance with an embodiment of the invention;

Figure 2 shows a schematic illustration of an example control system in accordance with an embodiment of the invention for the vehicle shown in Figure 1;

Figure 3 illustrates an example vehicle speed graph;

Figure 4 illustrates another example vehicle speed graph;

Figure 5 illustrates an example method in accordance with an embodiment of the invention of operating the control system, shown in Figure 2;

Figure 6 shows an illustration of a route of the vehicle, shown in Figure 1, at an example road junction;

Figure 7 shows an illustration of an example sub-method in accordance with an embodiment of the invention of determining a vehicle speed profile for controlling the vehicle speed along the route, shown in Figure 6, according to a stop condition;

Figure 8 shows an illustration of an example vehicle speed profile determined according to the sub-method, shown in Figure 7;

Figures 9 and 10 show illustrations of the vehicle, shown in Figure 1, travelling along the route, shown in Figure 6, according to the vehicle speed profile, shown in Figure 8; and

Figure 11 shows an illustration of another example vehicle speed profile determined in dependence on a change from the stop condition to a proceed condition as the vehicle, shown in Figure 1, travels along the route, shown in Figure 6;

Figures 12 and 13 show illustrations of the vehicle, shown in Figure 1, travelling along the route, shown in Figure 6, according to the vehicle speed profile, shown in Figure 11; and

Figure 14 to 16 illustrate the motion of the vehicle, shown in Figure 1, according to the method shown in Figure 5, at another example road junction.

**DETAILED DESCRIPTION**

Embodiments of the invention relate to a control module for controlling the speed of a vehicle travelling along a route that passes through a road junction, such as a T-junction, a box-junction, or a roundabout.

As the vehicle approaches the road junction, the control module is configured to receive a series of trajectory points defining a route, extending towards and through the road junction, for the vehicle to follow. Successive trajectory points in the series of trajectory points are separated from one another by known interval distances.

The control module also receives one or more signals, from a junction monitoring system, comprising information relating to the condition of the road junction, i.e. indicating whether the vehicle should stop at the road junction or whether the vehicle should proceed through the road junction.

The control module is configured to determine a vehicle speed profile, comprising a target speed for the vehicle at each trajectory point, which is used to control the vehicle speed as the as the vehicle travels along the route through the road junction.

As shall become clear in the following description, if the junction condition signal is indicative that the vehicle should stop at the road junction, the control module is configured to determine a stop point, in the series of trajectory points, at which the vehicle should be brought to a standstill.

The control module is further configured to determine the proximity of the vehicle to the stop point, based on the cumulative distance of the intervals between the successive trajectory points extending between the vehicle and the stop point, in order to determine a proximity-based vehicle speed profile for controlling the vehicle speed. In this manner, the control module may output the vehicle speed profile to decelerate the vehicle to a stand-still in a controlled manner, that may replicate a human-like braking profile for example.

If the junction condition changes during the approach towards the road junction, e.g. to indicate that the vehicle should proceed through the junction, the vehicle speed profile may be re-determined for a remaining portion of the route to cause the vehicle to proceed through the road junction.

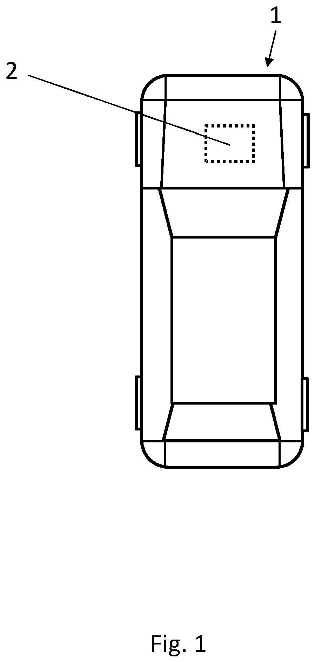

Figure 1 schematically illustrates an example vehicle 1 featuring a control system 2 for controlling the speed of the vehicle 1 at a road junction in accordance with an embodiment of the present invention.

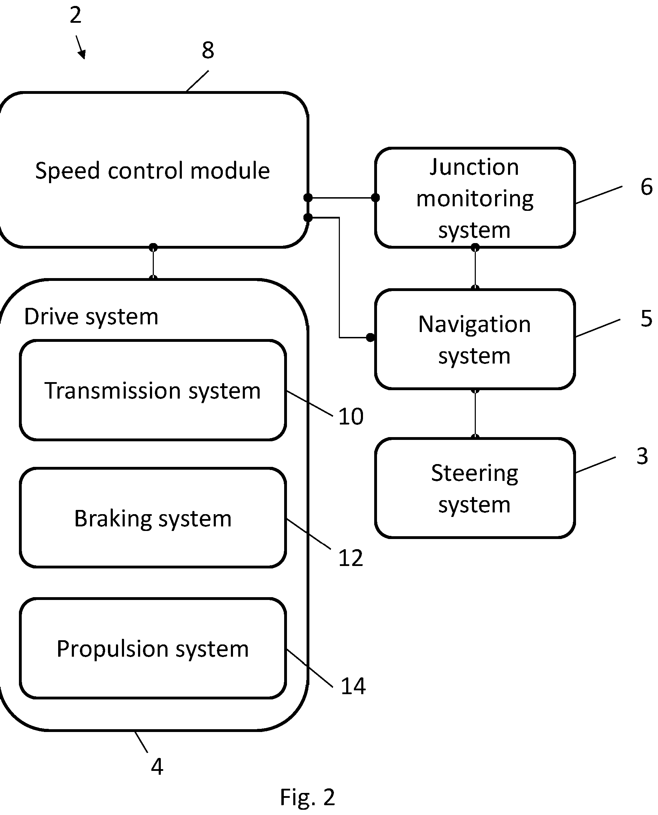

The control system 2 will now be described in more detail with additional reference to Figure 2, which schematically illustrates an example of the control system 2 in accordance with an embodiment of the present invention.

As shown in Figure 2, the control system 2 includes an electronically controlled steering system 3, a drive system 4, a navigation system 5, a junction monitoring system 6 and a speed control module 8.

The drive system 4 is configured to control the speed of the vehicle 1, as the vehicle 1 travels towards and through the road junction, based on a vehicle speed profile received from the speed control module 8. For this purpose, the drive system 4 may include a transmission system 10, a braking system 12 and a propulsion system 14, as shown in the example in Figure 2.

Each of the transmission system 10, the braking system 12 and the propulsion system 14 may take different forms in dependence on the configuration of the vehicle 1.

For example, the vehicle 1 may be a battery electric vehicle and the propulsion system 14 may comprise one or more electric machines for generating drive torque. In another example, the vehicle 1 may take the form of a hybrid electrical vehicle and the propulsion system 14 may comprise one or more electric machines and an internal combustion engine for generating drive torque. In a further example, the vehicle 1 may take the form of an internal combustion vehicle and the propulsion system 14 may comprise a spark ignition or combustion ignition internal combustion engine for generating drive torque.

It shall be appreciated that the configuration of the drive system 4 is therefore not intended to be limiting on the scope of the invention and the drive system 4 may control the speed of the vehicle 1 in accordance with the vehicle speed profile using any combination of torque, friction and/or drag generating devices.

The electronically controlled steering system 3 is configured to control the driving direction of the vehicle 1, particularly as the vehicle 1 travels towards and through the road junction, based on a navigation path received from the navigation system 5.

For this purpose, the electronically controlled steering system 3 may take any suitable form known in the art and may, for example, include: a steering mechanism configured to control the driving direction of the vehicle 1; a sensor system configured to detect the driving direction of the vehicle 1; an actuation system configured to control the steering system; and a controller configured to control the actuation system based on the navigation path.

The electronically controlled steering system 3 is not described in detail here to avoid obscuring the invention.

The navigation system 5 is configured to monitor the trajectory of the vehicle 1, detect when the vehicle 1 is approaching a road junction and determine a junction navigation path for the vehicle to follow based on the road junction.

In an example, the navigation system 5 may be configured to output a junction navigation path to the speed control module 8 in dependence on detecting that the vehicle 1 is approaching a road junction.

In other examples, the navigation system 5 may be configured to determine a, more general, navigation path for the vehicle 1 to follow towards a target destination and the navigation path may include a respective junction navigation path for each road junction that the navigation path passes through.

For this purpose, the navigation system 5 may be configured to determine a location of the vehicle 1, a location of the road junction, and/or a proximity of the vehicle 1 to the road junction.

The junction navigation path includes a series of trajectory points defining a route for the vehicle 1 to follow towards and through the road junction. In other words, the series of trajectory points define a route of the vehicle 1 along a first roadway, on approach towards the road junction, and a route through the road junction, moving from the first roadway to a second roadway.

Each trajectory point may define a respective target position, which may be a geographical location, for the vehicle 1 to pass through as the vehicle 1 navigates the road junction. In this manner, the junction navigation path may be output to the electronically controlled steering system 3 so that the trajectory, i.e. the driving direction, of the vehicle 1 may be controlled so as to steer the vehicle 1 through consecutive trajectory points as the vehicle 1 navigates the road junction.

In an example, successive trajectory points, in the series of trajectory points, may be spaced at equal intervals along the route 1.

In another example, the interval between successive trajectory points may change in dependence on one or more features of the route. For example, successive trajectory points may be defined with smaller intervals of separation wherever the route of the vehicle 1 includes a change of direction, e.g. manoeuvring the vehicle 1 around a corner or obstacle of the road junction. This may provide for more precise speed and/or steering control for such manoeuvres.

It shall be appreciated that the navigation system and the methods for determining the positions of the series of trajectory points are well-known in the art and are not described in detail here to avoid obscuring the invention.

The navigation system 5 may take the form of, or otherwise include, include a positioning system and/or a mapping system, such as a visual simultaneous localisation and mapping (VSLAM) system or a global navigation satellite system (GNSS), for example.

In the example shown in Figure 2, the navigation system 5 includes a global positioning system (GPS) and a VSLAM system configured to determine the junction navigation path, the position of the vehicle 1 on the junction navigation path, and, more generally, to determine a path for the vehicle to follow towards a target destination.

Hence, the navigation system 5 determines a path towards the target destination, which passes through one or more road junctions, and determines the location of the vehicle 1 on that path. At each road junction, the navigation system 5 determines a respective junction navigation path configured to guide the vehicle 1 through the road junction, from a first roadway to a second roadway that leads towards the target destination, as shall become clear in the following description.

GPS and VSLAM systems, configured for this purpose, are well-known in the art and are not described in more detail here to avoid obscuring the invention. Nonetheless, more information can be found in the discussion about localisation and mapping techniques in "An Overview to Visual Odometry and Visual SLAM: Applications to Mobile Robotics" by K. Yousif, A. Bab-Hadiashar and R. Hoseinnezhad as published in Intelligent Industrial Systems 1, 289-311 (2015), for example.

When the navigation system 5 detects that the vehicle 1 is approaching a road junction, the junction monitoring system 6 is configured to monitor a condition of the road junction and, in particular, to determine a corresponding junction condition signal that is output to the speed control module 8.

The junction condition signal is generated to refine the vehicle speed control as the vehicle 1 navigates the road junction and includes information that is indicative of a stop-condition or a proceed-condition of the road junction. More specifically, the junction condition signal is indicative as to whether the vehicle 1 should stop at the junction, i.e. in a stop-condition, or whether the vehicle should proceed through the junction, i.e. in a proceed-condition.

The junction monitoring system 6 may monitor the road junction during the approach of the vehicle 1 and determine the stop-condition or the proceed-condition in dependence on one or more of: a signal output from a traffic light at the road junction; a traffic status of the road junction; and/or a right of way of the vehicle for navigating the road junction, for example.

It shall therefore be appreciated that the junction monitoring system 6 may therefore determine the stop-condition in dependence on one or more of: a corresponding road marking or traffic sign; a stop-signal of a traffic light at the road junction; another vehicle presenting an obstacle in the route through the junction; and/or the absence of a right of way or, in other words, the right of way of another vehicle approaching or crossing the road junction, for example.

Similarly, the junction monitoring system 6 may determine proceed-condition in dependence on one or more of: a proceed-signal of a traffic light at the road junction; the right of way to cross the road junction; and/or the absence of any other vehicle approaching or obstructing the route through the road junction, for example.

In order to observe the road junction and determine the junction monitoring signal, the junction monitoring system 6 may take the form of an object detection and classification system, for example. The object detection and classification system may include one or more sensors configured to observe the path ahead of the vehicle 1 and determine corresponding optical data. The object detection and classification system may also include an image processing system configured to process the optical data and detect any features of the road junction that are indicative of the junction condition.

For example, the image processing system may be configured to detect at least one of: a traffic light signal, a road marking, such as a stop line, and/or determine the position, velocity and/or trajectory of other vehicles at, or approaching, the road junction, for example.

Image processing systems capable of generating the junction condition signal are well-known in the art and are not described in more detail here to avoid obscuring the invention. For more information see 'Real Time Visual Traffic Lights Recognition Based on Spot Light Detection and Adaptive Traffic Lights Templates' by R. de Charette, F. Nashashibi (2009), for example.

The speed control module 8 includes one or more controllers configured to receive the junction navigation path and the junction monitoring signal and to determine a vehicle speed profile for controlling the vehicle speed as the vehicle 1 travels along the route towards and through the road junction.

In an example, one or more other control systems (not shown) of the vehicle 1 may control the vehicle speed between road junctions and the speed control module 8 may determine the vehicle speed as the vehicle 1 travels along the junction navigation path. In other examples, the speed control module 8 may control the vehicle speed along the entire path towards the target destination. However, the control of the vehicle speed between road junctions is not described in detail here to avoid obscuring the invention. Considering the vehicle speed profile in more detail, the speed control module 8 may be configured to determine a target speed for the vehicle 1 at each trajectory point on the route towards and through the road junction so that: i) the vehicle 1 is decelerated to a standstill at the road junction if the speed control module 8 receives the stop-condition; and ii) the vehicle 1 travels through the road junction if the speed control module 8 receives the proceed-condition.

Furthermore, if the junction condition changes whilst the vehicle 1 is approaching the road junction, the speed control module 8 is configured to re-determine the vehicle speed profile to cause the vehicle 1 to proceed through the road junction. For example, the speed control module 8 may be configured to re-determine the target speed for the vehicle 1 at each of those trajectory points arranged ahead of the vehicle 1.

As shall become clear in the following description, the vehicle speed profile and, hence, the target speed at each trajectory point may be determined based on one or more of the following speed control parameters, including: a speed limit for the road; a proximity of the vehicle 1 to the road junction; a manoeuvre or change in driving direction between consecutive trajectory points and/or the junction condition.

The speed control module 8 includes one or more look-up tables associated with respective speed control parameters that may define a vehicle speed profile and/or that may be used to determine the target speed at each trajectory point.

The speed control module 8 additionally or alternatively includes one or more pre-determined vehicle speed graphs that plot target speed values against a stopping distance of the vehicle 1. The stopping distance may be equated to the proximity to a stop line of the road junction, for example.

Each vehicle speed graph may be associated with a respective roadway and/or speed limit of said roadway and, in some examples, the speed control module 8 may determine the target speed for each trajectory point based on the vehicle speed graph corresponding to said roadway and/or said speed limit of said roadway. Such look-up tables and/or vehicle speed graphs may be stored in a memory storage device of the speed control module 8, for example.

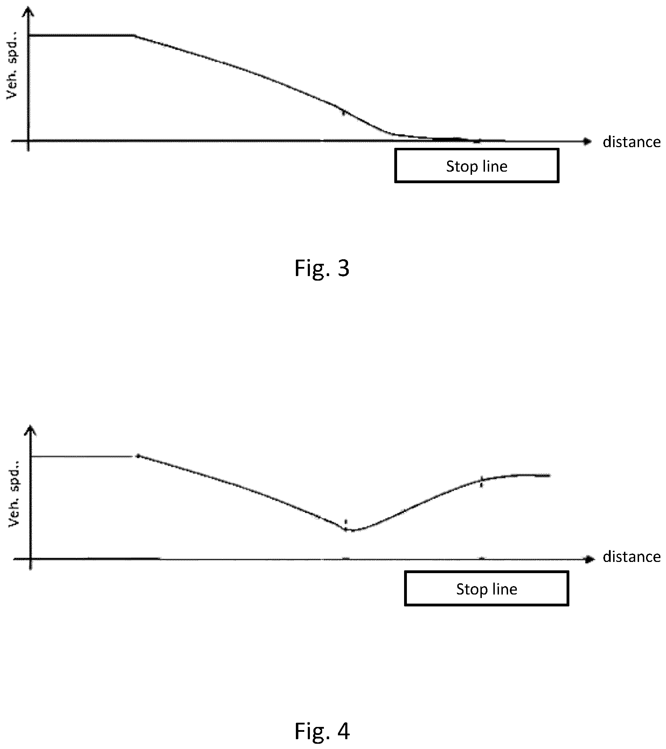

To illustrate this, Figure 3 shows a pre-determined vehicle speed graph for a vehicle on a first roadway having a speed limit of 30 mph. As shown, the vehicle speed decelerates in a human-like manner, reducing at a near constant rate until the vehicle is within close proximity of the stop-line. Thereafter, the braking force is reduced to bring the vehicle 1 to a more comfortable stop at the stop-line.

Figure 4 shows another example pre-determined vehicle speed graph for a vehicle on the same roadway, where the junction condition changes to a proceed condition shortly before the vehicle 1 reaches the stop-line. In this case, the vehicle speed increases towards the speed limit of the roadway after the junction condition changes and the vehicle 1 proceeds through the road junction, past the stop-line.

For this purpose, it shall be appreciated that each controller of the speed control module 8 may comprise a control unit or computational device having one or more electronic processors.

A set of instructions may be provided that cause the one or more controllers, or control units, to implement a control method, such as the control methods described herein, when executed. The set of instructions may be embedded in one or more of the electronic processors. Alternatively, the set of instructions may be provided as software to be executed by one or more of the electronic processors.

The set of instructions may be embedded in a computer-readable storage medium (e.g., a non-transitory computer-readable storage medium) that may comprise any mechanism for storing information in a form readable by a machine or electronic processors/computational device. This may include, without limitation: a magnetic storage medium (e.g., floppy diskette); optical storage medium (e.g., CD-ROM); magneto optical storage medium; read only memory (ROM); random access memory (RAM); erasable programmable memory (e.g.,

EPROM and EEPROM); flash memory; or electrical or other types of medium for storing such information/instructions.

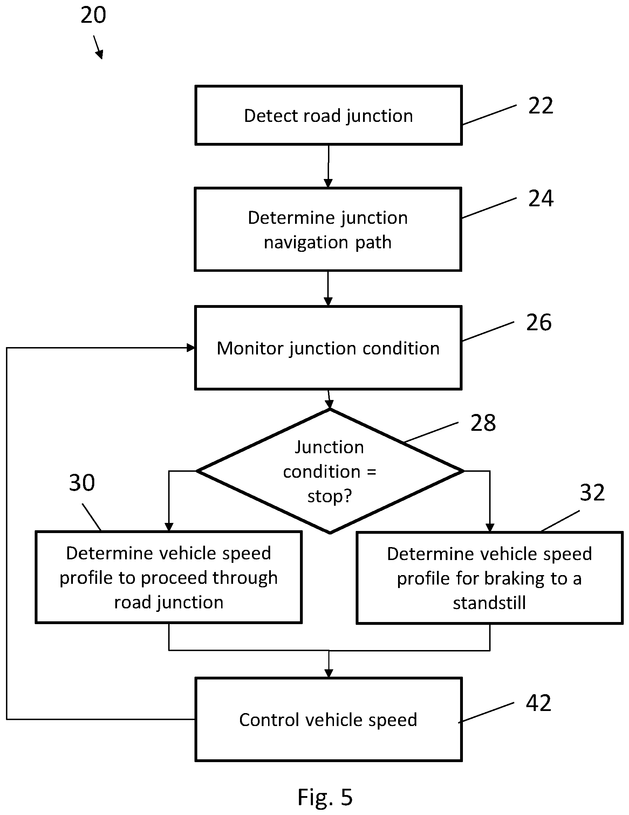

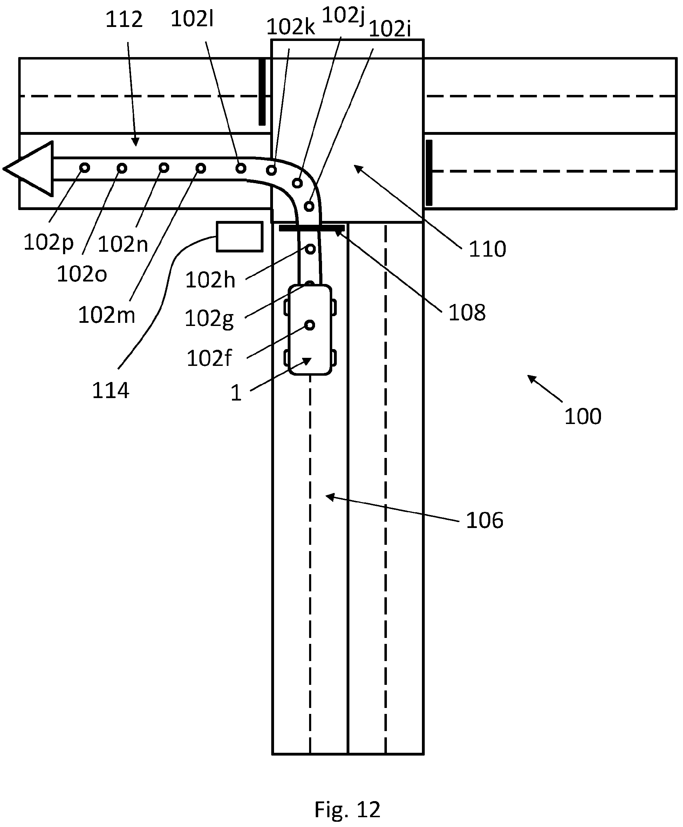

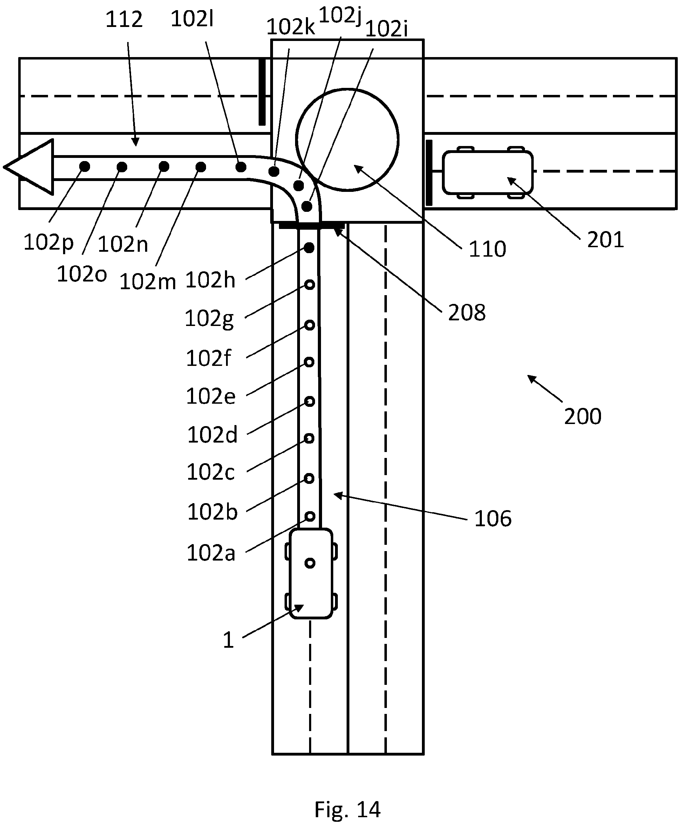

The operation of the control system 2 shall now be described with additional reference to Figures 5 to 16.

Figure 5 shows an example method 20 of controlling the speed of the vehicle 1 at a road junction in accordance with an embodiment of the invention.

As described previously, the vehicle 1 may be driven along a path towards a target destination and the path may pass through one or more road junctions.

In step 22, the control system 2 detects that the vehicle 1 is approaching a road junction. For example, the navigation system 5 may determine that the path towards the target destination passes through a road junction and that the vehicle 1 is within a threshold proximity of the road junction.

The detection may be triggered in dependence on the geo-location of the vehicle 1 entering a zone associated with the geo-location of the road junction, for example.

In step 24, the control system 2 determines a junction navigation path for the vehicle 1 to follow through the detected road junction.

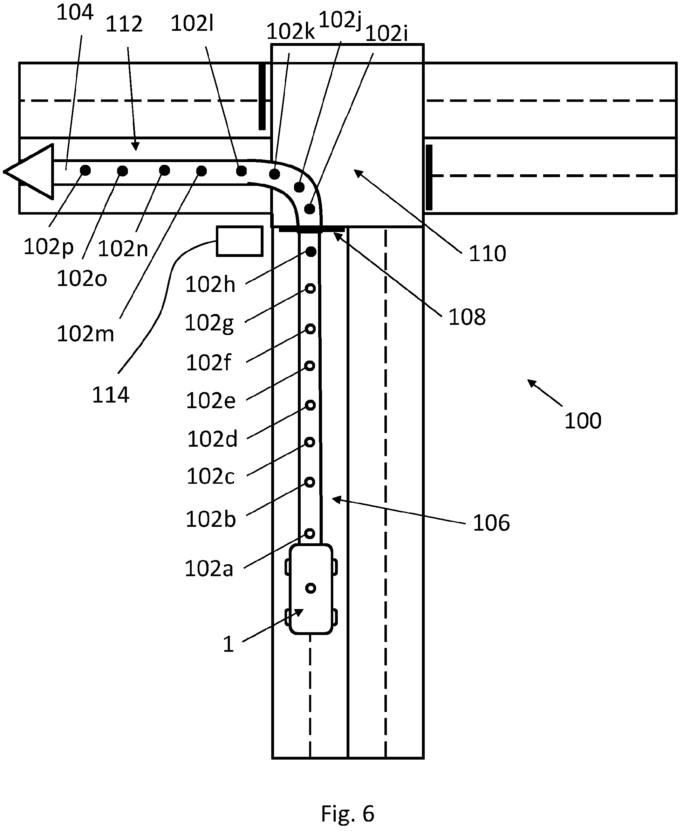

By way of example, Figure 6 schematically illustrates the vehicle 1 approaching an example road junction 100 in the form of a T-junction.

In dependence on detecting the road junction 100, in step 22, the navigation system 5 determines a series of trajectory points 102(a-p) arranged ahead of the vehicle 1, extending towards and through the road junction 100, that define a route 104 for the vehicle 1 to follow towards the target destination.

Each trajectory point 102(a-p) provides a target position for the vehicle 1 to pass through as the vehicle 1 navigates the road junction 100 and the route 104 is output to the electronically controlled steering system 3 to control the driving direction of the vehicle 1 accordingly.

As shown in Figure 6, the series of trajectory points 102(a-p) are equally spaced, with a constant interval between successive trajectory points, in this example.

The interval between the successive trajectory points is small enough to facilitate adequate steering control to perform the desired manoeuvre at the road junction 100. For example, the interval between adjacent trajectory points may be a distance of less than or equal to 0.5 m.

As shown in this example, the series of trajectory points 102(a-p) define the route 104: along a first roadway 106 that precedes a stop line 108, or other road surface marking, at the road junction 100; through a manoeuvring section 110 of the road junction 100, within which the vehicle 1 is manoeuvred between the first roadway 106 and a second roadway 112; and along the second roadway 112, which extends away from road junction 100, towards the target destination.

In this example, the route 104 includes a left turn from the first roadway 106 to the second roadway 112 in the manoeuvring section 110 of the road junction 100.

In steps 26 to 40, the control system 2 monitors the condition of the road junction and determines a vehicle speed profile for controlling the speed of the vehicle 1 along the route 104 of the junction navigation path in accordance with the junction condition. For this purpose, the junction monitoring system 6 determines the junction monitoring signal, indicating the junction condition, and the speed control module 8 may determine a target speed for the vehicle 1 at each trajectory point 102(a-p) based on the junction condition.

Considered in more detail, in step 26, the control system 2 monitors the road junction 100 and determines the junction condition.

For example, the road junction 100, shown in Figure 6, includes a traffic light 114 for controlling road traffic on the first roadway 106 and the junction monitoring system 6 is configured to observe the road junction 100 and determine whether the traffic light 114 is outputting a stop-signal or a proceed-signal.

For example, the junction monitoring system 6 may use one or more known image processing methods for detecting the traffic light 114, recording an image of the traffic light 114 and determining whether the traffic light 114 is outputting a stop-signal or a proceed-signal based on the recorded image.

The junction monitoring system 6 determines a corresponding junction monitoring signal, indicating either a stop-condition or a proceed-condition, and outputs the junction monitoring signal to the speed control module 8.

In step 28, the speed control module 8 receives the junction monitoring signal and determines whether the signal is indicative of a stop-condition or a proceed-condition.

If the junction condition is a proceed condition, the control system 2 determines, in step 30, a vehicle speed profile, which may be formed by a target speed for each of the trajectory points, configured to cause the vehicle 1 to proceed through the road junction 100 and perform the manoeuvre turning left from the first roadway 106 to the second roadway 112.

The control system 2 may determine the vehicle speed profile, and the target speed at each trajectory point in particular, based on one or more of: a speed limit of the roadway, an acceleration/deceleration limit, a speed condition for manoeuvres, and/or the proximity of each trajectory point to the road junction 100, for example.

The vehicle speed profile is then output to the electronically controlled steering system 3.

If the junction condition is a stop condition, the control system 2 determines, in step 32, a vehicle speed profile for decelerating the vehicle 1 to a standstill at the road junction 100.

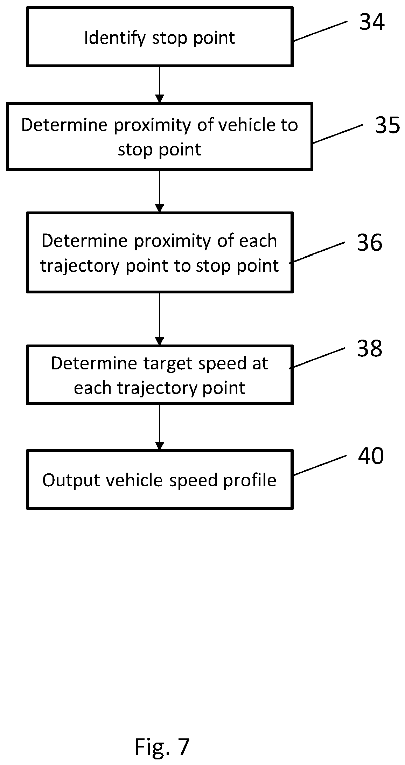

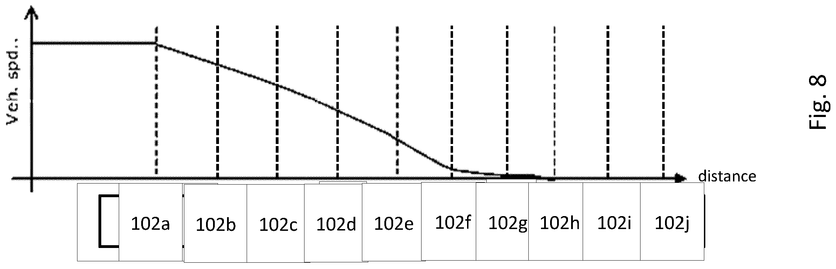

For this purpose, the method 20 may further include sub-steps 34 to 40, as shown in Figure 7, which will now be described with additional reference to Figures 8 to 10.

In sub-step 34, the control system 2 determines a stop point in the series of trajectory points for bringing the vehicle 1 to a standstill ahead of the road junction 100.

For example, the speed control module 8 may receive the geo-location of the stop line 108 and compare the positions of the series of trajectory points to the geo-location of the stop line 108 to identify the stop point from amongst the series of trajectory points. In particular, identifying the stop point as the last trajectory point 102h in the series of trajectory points that precedes the stop line 108.

In sub-step 35, the speed control module 8 determines the proximity of the vehicle 1 to the stop point 102h.

For this purpose, the speed control module 8 may determine the cumulative distance of the intervals between the successive trajectory points arranged between the stop point 102h and the vehicle 1.

Since the intervals are constant between the successive trajectory points shown in the example in Figure 6, the proximity of the vehicle 1 to the stop point 102h may be determined by the equation:

$$\text{Cumulative distance} = \text{Interval distance} \times \alpha$$

where $\alpha$ is the number of trajectory points arranged between the vehicle 1 and the stop point 102h.

Thereafter, the speed control module 8 determines the vehicle speed profile for controlling the speed of the vehicle 1 based on the proximity of the vehicle 1 to the stop point 102h, determined in sub-step 35.

The speed control module 8 determines the vehicle speed profile using a vehicle speed algorithm, by selecting one of the look-up tables and/or the vehicle speed graphs stored in the memory storage device of the speed control module 8, based on the proximity of the vehicle 1 to the stop point 102h.

Each of the look-up tables and the vehicle speed graphs may provide a time or distance varying set of target speed values for decelerating the vehicle 1 to a standstill over a given distance, which may correspond to the proximity of the vehicle 1 to the stop point 102h.

In an example, the vehicle speed profile comprises a target speed for each of the trajectory points.

Hence, in sub-step 36, the speed control module 8 may determine the proximity of each of those trajectory points that precede the stop point 102h, to the stop point 102h.

The proximity may be determined in a similar manner to the determination of the proximity of the vehicle 1 to the stop point 102h. For example, the speed control module 8 may determine, for each trajectory point 102(a-g) that precedes the stop point 102h, the cumulative distance of the intervals between the successive trajectory points arranged between that trajectory point and the stop point 102h.

Since the intervals are constant between the successive trajectory points shown in the example in Figure 6, the proximity of each trajectory point may be determined by the equation:

$$\text{Cumulative distance} = \text{Interval distance} \times \beta$$

where $\beta$ is the number of trajectory points arranged between that trajectory point and the stop point 102h.

Considering the third trajectory point 102c as an example, the cumulative distance would be five times the interval distance, since there are five trajectory points between the trajectory point 102c and the stop point 102h.

In sub-step 38, the control system 2 may determine a target speed for the vehicle 1 at each trajectory point in the series of trajectory points 102(a-p).

The speed control module 8 selects one of the look-up tables and/or the vehicle speed graphs based on the proximity of the vehicle 1 to the stop point 102h and determines the target speed at each trajectory point by reading target speed values, corresponding to the proximity of each trajectory point to the stop line 108, from the selected look-up table and/or vehicle speed graph.

By way of example, the speed control module 8 may select the vehicle speed graph shown in Figure 3 and the target speeds for the trajectory points may be read from the vehicle speed graph, as illustrated in Figure 8.

In this manner, the speed control module 8 may set a target speed of zero mph for the stop point 102h and a target speed of zero mph for each trajectory point 102(i-p) that succeeds the stop point 102h.

Consequently, the trajectory points 102(i-p) that succeed the stop point 102h are effectively discounted because the vehicle 1 will not travel beyond the stop point 102h whilst the stop condition remains.

The target speeds between successive trajectory point may decelerate at a substantially constant rate, as shown in Figure 8, until the sixth trajectory point 102f. Beyond the sixth trajectory point 102f, the deceleration force or change in target speed may decrease so that the vehicle 1 may come to a gradual rest at the stop point 102h.

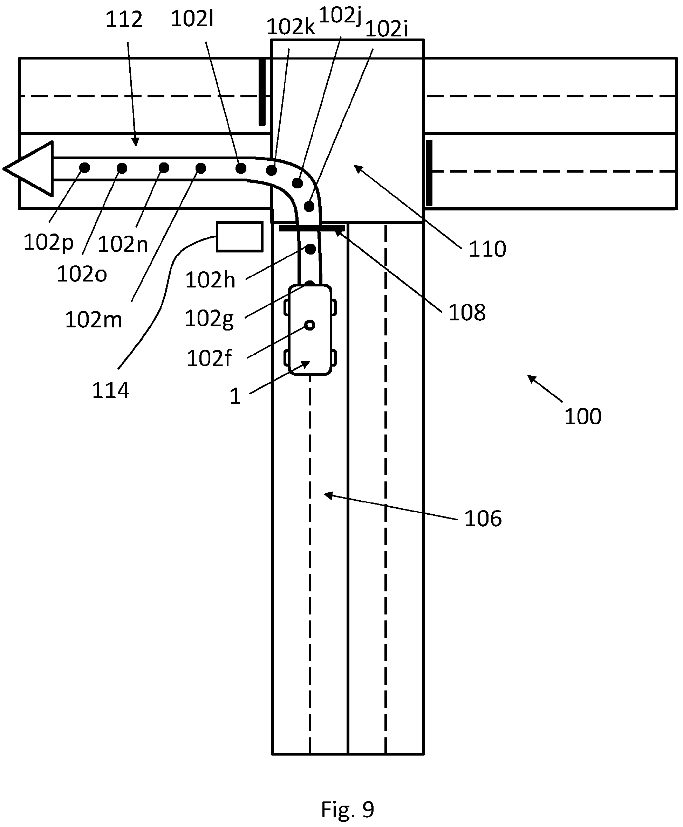

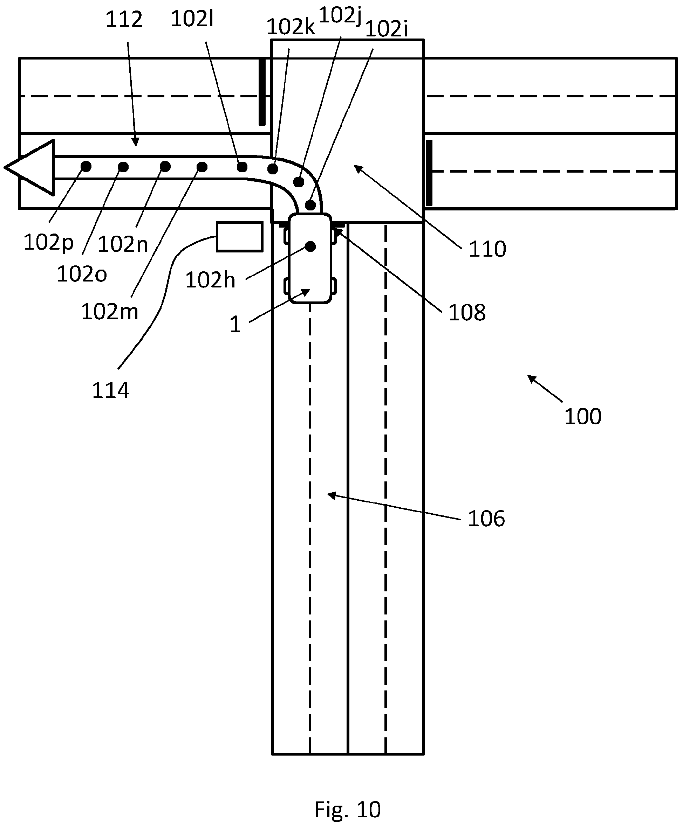

The progress of the vehicle 1 according to this vehicle speed profile is shown schematically through Figures 6, 9 and 10, where Figure 9 shows the vehicle 1 at the sixth trajectory point 102f and Figure 10 shows the vehicle at a standstill at the stop point 102h.

In sub-step 40, the speed control module 8 may output the vehicle speed profile to the drive system 4.

In step 42, the drive system 4 receives the vehicle speed profile and may therefore control the transmission system 10, the braking system 12 and/or the propulsion system 14 based on the vehicle speed profile to control the vehicle speed as the vehicle 1 navigates the road junction 100 accordingly.

Notably, as the vehicle approaches the road junction 100, the control system 2 continues to monitor the road junction 100 to detect any changes in the junction condition, in step 26.

If the junction condition changes, the control system 2 may re-determine the target speed at each trajectory point arranged ahead of the vehicle 1 in accordance with steps 30 and 32.

In other words, a new target speed may be determined for each of the trajectory points arranged in a remaining portion of the route through the road junction 100.

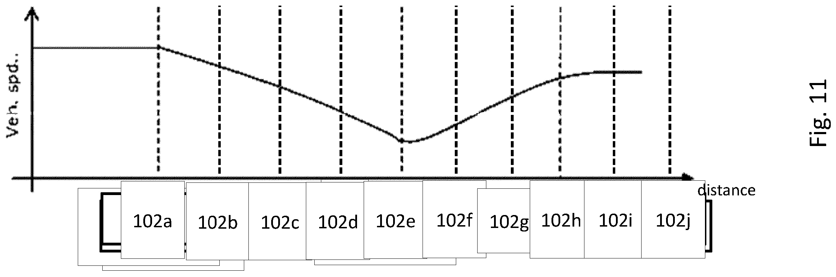

By way of example, Figure 11 illustrates an example vehicle speed profile comprising a target speed for the vehicle at each trajectory point, when the junction condition changes to a proceed condition during the approach of the vehicle 1 towards the road junction 100.

In this example, the junction condition changes to the proceed condition when the vehicle 1 reaches the third trajectory point 102e preceding the road junction 100. As shown in Figure 11, the successive target speeds initially decrease when the vehicle 1 enters the zone associated with the road junction 100, until the junction condition changes when the vehicle 1 reaches the third trajectory point 102e preceding the road junction 100. At this point, the control system 2 re-determines the target speed for each of those trajectory points arranged ahead of the vehicle 1 and, as shown in Figure 11, the target speed then increases again towards the speed limit of the first roadway 106. In this manner, the vehicle proceeds through the road junction 100 towards the target destination. This process is illustrated schematically in Figures 6 and 12 to 13, which correspond to the vehicle speed profile shown in Figure 11.

It shall be appreciated that, in other examples, the junction condition may change from a proceed condition to a stop condition as the vehicle 1 approaches the road junction 100. In such examples, the control system 2 may re-determine the target speed for those trajectory points arranged ahead of the vehicle 1 that precede the stop line 108, according to step 32, and so the vehicle 1 may be decelerated to a standstill with a greater braking force.

It shall also be appreciated that, in other examples, the junction condition may change after the vehicle 1 has stopped at the road junction 100. For example, the vehicle 1 may be at a standstill at the road junction 100, waiting for the traffic light signal to change, and the control system 2 may re-determine the target speed for the trajectory points arranged ahead of the vehicle, according to step 30, when the junction condition changes, thereby causing the vehicle 1 to move away from the stop line 108 and proceed through the road junction 100.

In this manner, the method 20 provides enhanced control over the vehicle speed as the vehicle 1 navigates the road junction 100 and the vehicle speed is controlled so as to decelerate the vehicle 1 to a standstill in a controlled manner when the traffic light 114 outputs a stop-signal, and to proceed through the road junction 100 according to the junction navigation path, when the traffic light 114 outputs a proceed-signal.

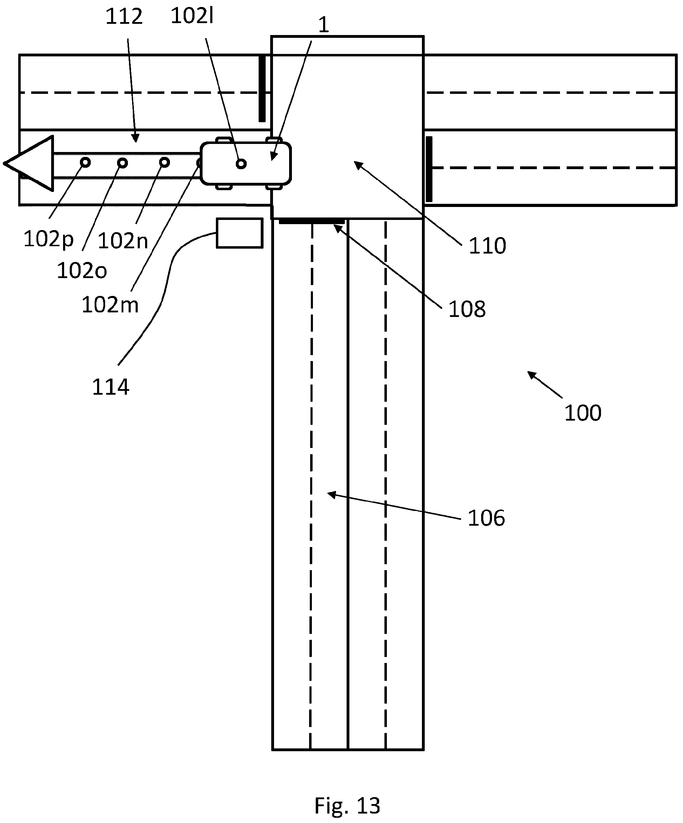

It shall be appreciated that the example above is not limited to the example road junction shown and, by way of example, Figures 13 to 15 show the vehicle 1 approaching an alternative road junction 200, this time in the form of a roundabout.

In this example, the method 20 proceeds substantially as described previously. However, in this example, at step 26, the junction monitoring system 6 determines the stop condition based on the approach of another vehicle 201 towards the road junction 200.

In particular, during the approach towards the road junction 200, the junction monitoring system 6 detects the other vehicle 201 approaching the road junction 200 and the junction monitoring system 6 determines the stop condition since the other vehicle 201 has the right of way to proceed through the road junction 200 in this example.

Accordingly, the speed control module 8 determines the vehicle speed profile to decelerate the vehicle 1 to a standstill at a stop line 208 of the road junction 200, as described in step 32 of the method 20.

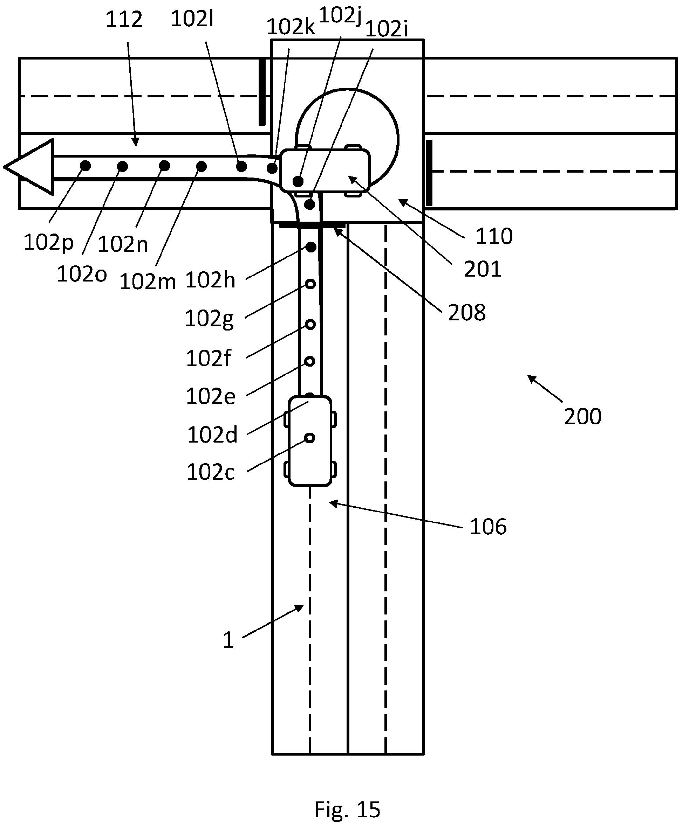

As shown in Figure 15, the stop condition remains whilst the other vehicle 201 obstructs the route 104 through the road junction 200.

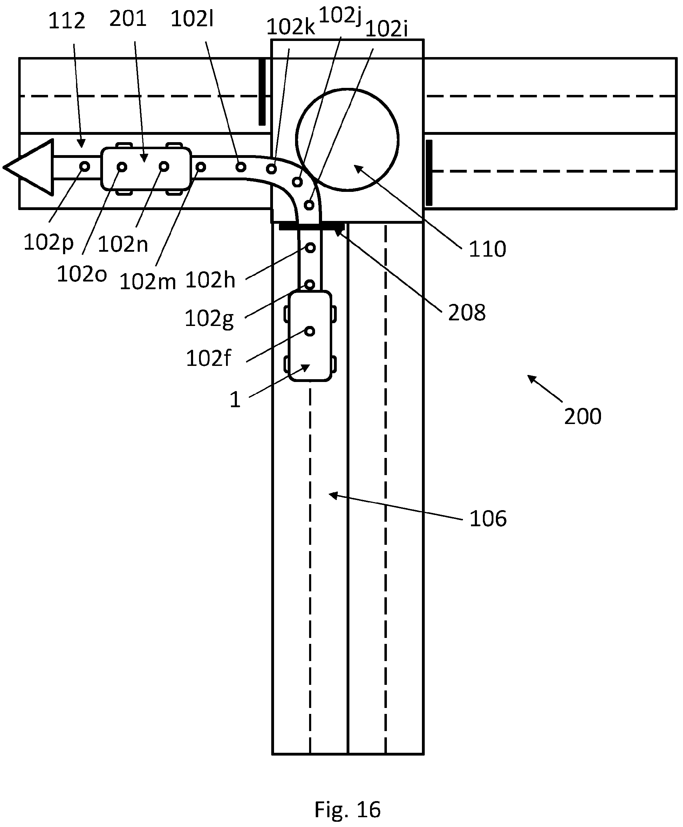

However, once the other vehicle 201 has cleared the road junction 200, as shown in Figure 16, the junction monitoring system 6 determines the proceed condition, according to step 26, and the speed control module 8 determines a vehicle speed profile to cause the vehicle 1 to proceed through the road junction 200, according to step 30.

It will be appreciated that various changes and modifications can be made without departing from the scope of the present invention defined by the appended claims.

**Claims**

1. A method (20) of controlling vehicle speed at a road junction (100), the method (20) comprising:

   receiving a navigation path comprising:
   a series of trajectory points (102a-p) defining a route (104) of the vehicle (1) towards and through the road junction (100), wherein successive trajectory points (102a-p) are separated from one another by respective intervals;
   receiving a junction condition signal from a junction monitoring system (6) of the vehicle (1); and
   if the junction condition signal is indicative that the vehicle (1) should stop at the junction (100):

   identifying a stop point (102h) in the series of trajectory points (102a-p) for bringing the vehicle (1) to a standstill at the road junction (100);
determining the proximity of the vehicle (1) to the road junction (100) based on the cumulative distance of the respective intervals between the successive trajectory points (102a-p) extending between the vehicle (1) and the stop point (102h);
determining a vehicle speed profile for the vehicle (1) based on the proximity of the vehicle (1) to the road junction (100); and
controlling the speed of the vehicle (1), as the vehicle (1) travels along the route (104) to the stop point (102h), based on the vehicle speed profile;

   **characterized in that**:
   the vehicle speed profile is determined by:

   selecting a look-up table from a plurality of look-up tables, or selecting a pre-determined vehicle speed graph from a plurality of pre-determined vehicle speed graphs, based on the proximity of the vehicle (1) to the road junction (104); and
   determining the vehicle speed profile based on the selected look-up table or pre-determined vehicle speed graph.

2. A method (20) according to claim 1, further comprising:

   if the junction condition signal changes, after the vehicle (1) has travelled along a portion of the route (104), to indicate that the vehicle (1) should proceed through the junction (100):

   re-determining the vehicle speed profile for the remaining portion of the route (104); and
   controlling the speed of the vehicle (1) along the remaining portion of the route (104) based on the vehicle speed profile.

3. A method (20) according to any preceding claim, wherein successive trajectory points (102a-p) in the series of trajectory points (102a-p) are spaced at equal intervals from one another along the route (104).

4. A method (20) according to any preceding claim, wherein determining the vehicle speed profile comprises determining a target speed for the vehicle (1) at each of the trajectory points (102a-p) arranged between the vehicle (1) and the stop point (102h).

5. A method (20) according to claim 4, wherein determining the target speed for the vehicle (1) at each of the trajectory points (102a-p) arranged between the vehicle (1) and the stop point (102h) comprises:

> determining the proximity to the stop point (102h) of each of those trajectory points (102a-p) that precede the stop point (102h); and determining the target speed for the vehicle (1) at each of those trajectory points (102a-p) that precede the stop point (102h) based on the proximity of said trajectory point (102a-p) to the stop point (102h).

6. A method (20) according to claim 5, wherein determining the proximity of each trajectory point (102a-p) to the stop point (102h) comprises determining the cumulative distance of the intervals between the successive trajectory points (102a-p) extending between that trajectory point (102a-p) and the stop point (102h).

7. A method (20) according to any of claims 4 to 6, wherein the target speed for the vehicle (1) at each of the trajectory points (102a-p) is determined by reading off a respective target speed value from the look-up table or the pre-determined vehicle speed graph based on the proximity of said trajectory point (102a-p) to the stop point (102h).

8. A method (20) according to any preceding claim, wherein the junction condition signal comprises information relating to at least one of:

> a signal output from a traffic light at the road junction (100);
> a traffic status of the road junction (100); and/or
> a right of way of the vehicle for proceeding through the road junction (100).

9. A method (20) of controlling a vehicle (1), comprising:

> monitoring a location of the vehicle (1); and controlling the speed of the vehicle (1) according to the method (20) of any preceding claim in dependence on the location of the vehicle (1) entering a road junction zone.

10. A computer program comprising instructions which, when the program is executed by a computer, cause the computer to carry out the method (20) of any of claims 1 to 8 or the method of claim 9.

11. A computer-readable data carrier having stored thereon the computer program of claim 10.

12. A control system (2) for controlling the speed of a vehicle (1) at a road junction (100), the control system (2) comprising one or more controllers (8) configured to:

> receive a navigation path from a navigation system of the vehicle (1), wherein the navigation path comprises:
> a series of trajectory points (102a-p) defining a route (104) of the vehicle (1) towards and through the road junction (100), wherein successive trajectory points (102a-p) are separated from one another by respective intervals;
> receive a junction condition signal from a junction monitoring system (6) of the vehicle (1); and
> if the junction condition signal is indicative that the vehicle (1) should stop at the junction (100), the one or more controllers (8) are configured to:

>> identify a stop point (102h) in the series of trajectory points (102a-p) for bringing the vehicle (1) to a standstill at the junction (100);
>> determine the proximity of the vehicle (1) to the road junction (100) based on the cumulative distance of the respective intervals between the successive trajectory points (102a-p) extending between the vehicle (1) and the stop point (102h);
>> determine a vehicle speed profile for the vehicle (1) based on the proximity of the vehicle (1) to the road junction (100); and
>> output one or more control signals, based on the vehicle speed profile, to control the speed of the vehicle (1) as the vehicle (1) travels along the route (104) to the stop point (102h);

> **characterized in that**:
> the vehicle speed profile is determined by:

>> selecting a look-up table from a plurality of look-up tables, or selecting a pre-determined vehicle speed graph from a plurality of pre-determined vehicle speed graphs, based on the proximity of the vehicle (1) to the road junction (104); and
>> determining the vehicle speed profile based on the selected look-up table or pre-determined vehicle speed graph.

13. A control system (2) according to claim 12, wherein if the junction condition signal changes, after the vehicle (1) has travelled along a portion of the route (104), to indicate that the vehicle (1) should proceed through the junction (100), the one or more controllers (8) are further configured to:

> re-determine the vehicle speed profile for a remaining portion of the route (104); and
> output one or more control signals based on vehicle speed profile to control the speed of the vehicle (1) along a remaining portion of the route (104).

14. A vehicle (1) comprising a computer program according to claim 10, a computer-readable data carrier according to claim 11, and/or a control system (2) according to claim 12 or claim 13.

**Patentansprüche**

1. Verfahren (20) zum Steuern einer Fahrzeuggeschwindigkeit an einer Straßenkreuzung (100), das Verfahren (20) umfassend:
   Empfangen eines Navigationspfads, umfassend:

   eine Reihe von Trajektorienpunkten (102a-p), die eine Route (104) des Fahrzeugs (1) zur und über die Straßenkreuzung (100) definieren, wobei aufeinanderfolgende Trajektorienpunkte (102a-p) durch jeweilige Intervalle voneinander getrennt sind;
   Empfangen eines Kreuzungszustandssignals von einem Kreuzungsüberwachungssystem (6) des Fahrzeugs (1); und
   wenn das Kreuzungszustandssignal anzeigt, dass das Fahrzeug (1) an der Kreuzung (100) anhalten soll:

   Identifizieren eines Haltepunkts (102h) in der Reihe von Trajektorienpunkten (102a-p), um das Fahrzeug (1) zum Stillstand an der Straßenkreuzung (100) zu bringen;
   Bestimmen der Nähe des Fahrzeugs (1) zu der Straßenkreuzung (100) basierend auf der kumulativen Entfernung der jeweiligen Intervalle zwischen den aufeinanderfolgenden Trajektorienpunkten (102a-p), die sich zwischen dem Fahrzeug (1) und dem Haltepunkt (102h) erstrecken;
   Bestimmen eines Fahrzeuggeschwindigkeitsprofils für das Fahrzeug (1) basierend auf der Nähe des Fahrzeugs (1) zu der Straßenkreuzung (100); und
   Steuern der Geschwindigkeit des Fahrzeugs (1), während das Fahrzeug (1) entlang der Route (104) zu dem Haltepunkt (102h) fährt, basierend auf dem Fahrzeuggeschwindigkeitsprofil;
   **dadurch gekennzeichnet, dass:**
   das Fahrzeuggeschwindigkeitsprofil bestimmt ist durch:

   Auswählen einer Lookup-Tabelle aus einer Vielzahl von Lookup-Tabellen oder Auswählen eines vorbestimmten Fahrzeuggeschwindigkeitsdiagramms aus einer Vielzahl von vorbestimmten Fahrzeuggeschwindigkeitsdiagrammen basierend auf der Nähe des Fahrzeugs (1) zu der Straßenkreuzung (104); und
Bestimmen des Fahrzeuggeschwindigkeitsprofils basierend auf der ausgewählten Lookup-Tabelle oder dem vorbestimmten Fahrzeuggeschwindigkeitsdiagramm.

2. Verfahren (20) nach Anspruch 1, ferner umfassend: wenn sich das Kreuzungszustandssignal ändert, nachdem das Fahrzeug (1) entlang eines Abschnitts der Route (104) gefahren ist, um anzuzeigen, dass das Fahrzeug (1) über die Kreuzung (100) fahren soll:

   erneutes Bestimmen des Fahrzeuggeschwindigkeitsprofils für den verbleibenden Abschnitt der Route (104); und
   Steuern der Geschwindigkeit des Fahrzeugs (1) entlang des verbleibenden Abschnitts der Route (104) basierend auf dem Fahrzeuggeschwindigkeitsprofil.

3. Verfahren (20) nach einem der vorstehenden Ansprüche, wobei aufeinanderfolgende Trajektorienpunkte (102a-p) in der Reihe von Trajektorienpunkten (102a-p) in gleichen Abständen voneinander entlang der Route (104) beabstandet sind.

4. Verfahren (20) nach einem der vorstehenden Ansprüche, wobei das Bestimmen des Fahrzeuggeschwindigkeitsprofils das Bestimmen einer Zielgeschwindigkeit für das Fahrzeug (1) an jedem der Trajektorienpunkte (102a-p) umfasst, die zwischen dem Fahrzeug (1) und dem Haltepunkt (102h) angeordnet sind.

5. Verfahren (20) nach Anspruch 4, wobei das Bestimmen der Zielgeschwindigkeit für das Fahrzeug (1) an jedem der Trajektorienpunkte (102a-p), die zwischen dem Fahrzeug (1) und dem Haltepunkt (102h) angeordnet sind, umfasst:

   Bestimmen der Nähe zu dem Haltepunkt (102h) von jedem derjenigen Trajektorienpunkte (102a-p), die dem Haltepunkt (102h) vorangehen; und
   Bestimmen der Zielgeschwindigkeit für das Fahrzeug (1) an jedem dieser Trajektorienpunkte (102a-p), die dem Haltepunkt (102h) vorangehen, basierend auf der Nähe des Trajektorienpunkts (102a-p) zu dem Haltepunkt (102h).

6. Verfahren (20) nach Anspruch 5, wobei das Bestimmen der Nähe jedes Trajektorienpunkts (102a-p) zu dem Haltepunkt (102h) das Bestimmen der kumulativen Entfernung der Intervalle zwischen den aufeinanderfolgenden Trajektorienpunkten (102a-p) umfasst, die sich zwischen diesem Trajektorienpunkt (102a-p) und dem Haltepunkt (102h) erstrecken.

7. Verfahren (20) nach einem der Ansprüche 4 bis 6, wobei die Zielgeschwindigkeit für das Fahrzeug (1) an jedem der Trajektorienpunkte (102a-p) durch Ablesen eines jeweiligen Zielgeschwindigkeitswerts aus der Lookup-Tabelle oder dem vorbestimmten Fahrzeuggeschwindigkeitsdiagramm basierend auf der Nähe des Trajektorienpunkts (102a-p) zu dem Haltepunkt (102h) bestimmt wird.

8. Verfahren (20) nach einem der vorstehenden Ansprüche, wobei das Kreuzungszustandssignal Informationen in Bezug auf mindestens eines von Folgendem umfasst:

     ein Signal, das von einer Verkehrsampel an der Straßenkreuzung (100) ausgegeben wird;
     einen Verkehrsstatus der Straßenkreuzung (100); und/oder
     ein Vorfahrtsrecht des Fahrzeugs zum Überqueren der Straßenkreuzung (100).

9. Verfahren (20) zum Steuern eines Fahrzeugs (1), umfassend:

     Überwachen einer Position des Fahrzeugs (1); und
     Steuern der Geschwindigkeit des Fahrzeugs (1) gemäß dem Verfahren (20) nach einem der vorstehenden Ansprüche in Abhängigkeit von der Position des Fahrzeugs (1) beim Einfahren in eine Straßenkreuzungszone.

10. Computerprogramm, umfassend Anweisungen, die, wenn das Programm von einem Computer durchgeführt wird, den Computer veranlassen, das Verfahren (20) nach einem der Ansprüche 1 bis 8 oder das Verfahren nach Anspruch 9 durchzuführen.

11. Computerlesbarer Datenträger, der ein darauf gespeichertes Computerprogramm nach Anspruch 10 aufweist.

12. Steuersystem (2) zum Steuern der Geschwindigkeit eines Fahrzeugs (1) an einer Straßenkreuzung (100), das Steuersystem (2) umfassend eine oder mehrere Steuerungen (8), die konfiguriert sind zum: Empfangen eines Navigationspfads von einem Navigationssystem des Fahrzeugs (1), wobei der Navigationspfad umfasst:

     eine Reihe von Trajektorienpunkten (102a-p), die eine Route (104) des Fahrzeugs (1) zur und über die Straßenkreuzung (100) definieren, wobei aufeinanderfolgende Trajektorienpunkte (102a-p) durch jeweilige Intervalle voneinander getrennt sind;
Empfangen eines Kreuzungszustandssignals von einem Kreuzungsüberwachungssystem (6) des Fahrzeugs (1); und
wenn das Kreuzungszustandssignal anzeigt, dass das Fahrzeug (1) an der Kreuzung (100) anhalten soll, sind die eine oder mehreren Steuerungen (8) konfiguriert zum:

     Identifizieren eines Haltepunkts (102h) in der Reihe von Trajektorienpunkten (102a-p), um das Fahrzeug (1) an der Kreuzung (100) zum Stillstand zu bringen;
     Bestimmen der Nähe des Fahrzeugs (1) zu der Straßenkreuzung (100) basierend auf der kumulativen Entfernung der jeweiligen Intervalle zwischen den aufeinanderfolgenden Trajektorienpunkten (102a-p), die sich zwischen dem Fahrzeug (1) und dem Haltepunkt (102h) erstrecken;
     Bestimmen eines Fahrzeuggeschwindigkeitsprofils für das Fahrzeug (1) basierend auf der Nähe des Fahrzeugs (1) zu der Straßenkreuzung (100); und
     Ausgeben von einem oder mehreren Steuersignalen basierend auf dem Fahrzeuggeschwindigkeitsprofil, um die Geschwindigkeit des Fahrzeugs (1) zu steuern, während das Fahrzeug (1) entlang der Route (104) zu dem Haltepunkt (102h) fährt;
     **dadurch gekennzeichnet, dass:**
     das Fahrzeuggeschwindigkeitsprofil bestimmt ist durch:

         Auswählen einer Lookup-Tabelle aus einer Vielzahl von Lookup-Tabellen oder Auswählen eines vorbestimmten Fahrzeuggeschwindigkeitsdiagramms aus einer Vielzahl von vorbestimmten Fahrzeuggeschwindigkeitsdiagrammen basierend auf der Nähe des Fahrzeugs (1) zu der Straßenkreuzung (104); und
         Bestimmen des Fahrzeuggeschwindigkeitsprofils basierend auf der ausgewählten Lookup-Tabelle oder dem vorbestimmten Fahrzeuggeschwindigkeitsdiagramm.

13. Steuersystem (2) nach Anspruch 12, wobei, falls sich das Kreuzungszustandssignal ändert, nachdem das Fahrzeug (1) entlang eines Abschnitts der Route (104) gefahren ist, um anzuzeigen, dass das Fahrzeug (1) über die Kreuzung (100) fahren soll, die eine oder mehreren Steuerungen (8) ferner konfiguriert sind zum:

erneuten Bestimmen des Fahrzeuggeschwindigkeitsprofils für einen verbleibenden Abschnitt der Route (104); und

Ausgeben von einem oder mehreren Steuersignalen basierend auf dem Fahrzeuggeschwindigkeitsprofil, um die Geschwindigkeit des Fahrzeugs (1) entlang eines verbleibenden Abschnitts der Route (104) zu steuern.

14. Fahrzeug (1), umfassend ein Computerprogramm nach Anspruch 10, einen computerlesbaren Datenträger nach Anspruch 11 und/oder ein Steuersystem (2) nach Anspruch 12 oder Anspruch 13.

**Revendications**

1. Procédé (20) de commande de vitesse de véhicule au niveau d'un carrefour routier (100), le procédé (20) comprenant :
la réception d'un chemin de navigation comprenant :

une série de points de trajectoire (102a-p) définissant un itinéaire (104) du véhicule (1) vers et à travers le carrefour routier (100), dans lequel des points de trajectoire (102a-p) successifs sont séparés les uns des autres par des intervalles respectifs ;
la réception d'un signal de condition de carrefour en provenance d'un système de surveillance de carrefour (6) du véhicule (1) ; et
si le signal de condition de carrefour indique que le véhicule (1) doit s'arrêter au niveau du carrefour (100) :

l'identification d'un point d'arrêt (102h) dans la série de points de trajectoire (102a-p) pour l'immobilisation du véhicule (1) au niveau du carrefour routier (100) ;
la détermination de la proximité du véhicule (1) par rapport au carrefour routier (100) en fonction de la distance cumulée des intervalles respectifs entre les points de trajectoire (102a-p) successifs s'étendant entre le véhicule (1) et le point d'arrêt (102h) ;
la détermination d'un profil de vitesse de véhicule pour le véhicule (1) en fonction de la proximité du véhicule (1) par rapport au carrefour routier (100) ; et
la commande de la vitesse du véhicule (1), à mesure que le véhicule (1) se déplace le long de l'itinéraire (104) vers le point d'arrêt (102h), en fonction du profil de vitesse de véhicule ;
**caractérisé en ce que** :

le profil de vitesse de véhicule est déterminé par :

la sélection d'une table de consultation parmi une pluralité de tables de consultation, ou la sélection d'un graphique de vitesse de véhicule prédéterminée parmi une pluralité de graphiques de vitesse de véhicule prédéterminée, en fonction de la proximité du véhicule (1) par rapport au carrefour routier (104) ; et
la détermination du profil de vitesse de véhicule en fonction de la table de consultation ou du graphique de vitesse de véhicule prédéterminée, sélectionné.

2. Procédé (20) selon la revendication 1, comprenant en outre :
si le signal de condition de carrefour change, après que le véhicule (1) s'est déplacé le long d'une partie de l'itinéraire (104), indiquer que le véhicule (1) doit traverser le carrefour (100) :

la redétermination du profil de vitesse de véhicule pour la partie restante de l'itinéraire (104) ; et
la commande de la vitesse du véhicule (1) le long de la partie restante de l'itinéraire (104) en fonction du profil de vitesse de véhicule.

3. Procédé (20) selon l'une quelconque revendication précédente, dans lequel des points de trajectoire (102a-p) successifs dans la série de points de trajectoire (102a-p) sont espacés à intervalles égaux les uns des autres le long de l'itinéraire (104).

4. Procédé (20) selon l'une quelconque revendication précédente, dans lequel la détermination du profil de vitesse de véhicule comprend la détermination d'une vitesse cible pour le véhicule (1) au niveau de chacun des points de trajectoire (102a-p) agencés entre le véhicule (1) et le point d'arrêt (102h).

5. Procédé (20) selon la revendication 4, dans lequel la détermination de la vitesse cible pour le véhicule (1) au niveau de chacun des points de trajectoire (102a-p) agencés entre le véhicule (1) et le point d'arrêt (102h) comprend :

la détermination de la proximité par rapport au point d'arrêt (102h) de chacun de ces points de trajectoire (102a-p) qui précèdent le point d'arrêt (102h) ; et
la détermination de la vitesse cible pour le véhicule (1) au niveau de chacun de ces points de trajectoire (102a-p) qui précèdent le point d'arrêt (102h) en fonction de la proximité dudit point de trajectoire (102a-p) par rapport au point d'arrêt (102h).

6. Procédé (20) selon la revendication 5, dans lequel la détermination de la proximité de chaque point de trajectoire (102a-p) par rapport au point d'arrêt (102h) comprend la détermination de la distance cumulée des intervalles entre les points de trajectoire (102a-p) successifs s'étendant entre ce point de trajectoire (102a-p) et le point d'arrêt (102h).

7. Procédé (20) selon l'une quelconque des revendications 4 à 6, dans lequel la vitesse cible pour le véhicule (1) au niveau de chacun des points de trajectoire (102a-p) est déterminée en lisant une valeur de vitesse cible respective dans la table de consultation ou le graphique de vitesse de véhicule prédéterminée en fonction de la proximité dudit point de trajectoire (102a-p) par rapport au point d'arrêt (102h).

8. Procédé (20) selon l'une quelconque revendication précédente, dans lequel le signal de condition de carrefour comprend des informations se rapportant à au moins l'un parmi :

   un signal délivré en sortie par un feu de circulation au niveau du carrefour routier (100) ;
   un statut de trafic du carrefour routier (100) ; et/ou
   une priorité de passage du véhicule pour traverser le carrefour routier (100).

9. Procédé (20) de commande d'un véhicule (1), comprenant :

   la surveillance d'une localisation du véhicule (1) ; et
   la commande de la vitesse du véhicule (1) conformément au procédé (20) selon l'une quelconque revendication précédente en dépendance de la localisation du véhicule (1) entrant dans une zone de carrefour routier.

10. Programme d'ordinateur comprenant des instructions qui, lorsque le programme est exécuté par un ordinateur, amènent l'ordinateur à effectuer le procédé (20) selon l'une quelconque des revendications 1 à 8 ou le procédé selon la revendication 9.

11. Support de données lisible par ordinateur sur lequel est stocké le programme informatique selon la revendication 10.

12. Système de commande (2) permettant de commander la vitesse d'un véhicule (1) au niveau d'un carrefour routier (100), le système de commande (2) comprenant un ou plusieurs organes de commande (8) configurés pour :
recevoir un chemin de navigation en provenance d'un système de navigation du véhicule (1), dans lequel le chemin de navigation comprend :

   une série de points de trajectoire (102a-p) définissant un itinéraire (104) du véhicule (1) vers et à travers le carrefour routier (100), dans lequel des points de trajectoire (102a-p) successifs sont séparés les uns des autres par des intervalles respectifs ;
   recevoir un signal de condition de carrefour en provenance d'un système de surveillance de carrefour (6) du véhicule (1) ; et
   si le signal de condition de carrefour indique que le véhicule (1) doit s'arrêter au niveau du carrefour (100), le ou les organes de commande (8) sont configurés pour :

   identifier un point d'arrêt (102h) dans la série de points de trajectoire (102a-p) pour l'immobilisation du véhicule (1) au niveau du carrefour routier (100) ;
   déterminer la proximité du véhicule (1) par rapport au carrefour routier (100) en fonction de la distance cumulée des intervalles respectifs entre les points de trajectoire (102a-p) successifs s'étendant entre le véhicule (1) et le point d'arrêt (102h) ;
   déterminer un profil de vitesse de véhicule pour le véhicule (1) en fonction de la proximité du véhicule (1) par rapport au carrefour routier (100) ; et

   délivrer en sortie un ou plusieurs signaux de commande, en fonction du profil de vitesse de véhicule, pour commander la vitesse du véhicule (1) à mesure que le véhicule (1) se déplace le long de l'itinéraire (104) vers le point d'arrêt (102h) ;
   **caractérisé en ce que** :
   le profil de vitesse de véhicule est déterminé par :

   la sélection d'une table de consultation parmi une pluralité de tables de consultation, ou la sélection d'un graphique de vitesse de véhicule prédéterminée parmi une pluralité de graphiques de vitesse de véhicule prédéterminée, en fonction de la proximité du véhicule (1) par rapport au carrefour routier (104) ; et
   la détermination du profil de vitesse de véhicule en fonction de la table de consultation ou du graphique de vitesse de véhicule prédéterminée, sélectionné.

**13.** Système de commande (2) selon la revendication 12, dans lequel si le signal de condition de carrefour change, après que le véhicule (1) s'est déplacé le long d'une partie de l'itinéraire (104), pour indiquer que le véhicule (1) doit traverser le carrefour (100), le ou les organes de commande (8) sont configurés en outre pour :

> redéterminer le profil de vitesse de véhicule pour une partie restante de l'itinéraire (104) ; et
>
> délivrer en sortie un ou plusieurs signaux de commande en fonction de profil de vitesse de véhicule pour commander la vitesse du véhicule (1) le long d'une partie restante de l'itinéraire (104).

**14.** Véhicule (1) comprenant un programme d'ordinateur selon la revendication 10, un support de données lisible par ordinateur selon la revendication 11, et/ou un système de commande (2) selon la revendication 12 ou la revendication 13.

Fig. 1

Fig. 2

Fig. 3

Fig. 4

20

Detect road junction — 22

Determine junction navigation path — 24

Monitor junction condition — 26

Junction condition = stop? — 28

30 — Determine vehicle speed profile to proceed through road junction

32 — Determine vehicle speed profile for braking to a standstill

Control vehicle speed — 42

Fig. 5

Fig. 6

```
┌─────────────────────────────┐
│      Identify stop point     │ ── 34
└─────────────────────────────┘
               │
               ▼
┌─────────────────────────────┐
│  Determine proximity of vehicle to │ ── 35
│          stop point          │
└─────────────────────────────┘
               │
               ▼
┌─────────────────────────────┐
│   Determine proximity of each │ ── 36
│  trajectory point to stop point │
└─────────────────────────────┘
               │
               ▼
┌─────────────────────────────┐
│   Determine target speed at   │ ── 38
│     each trajectory point     │
└─────────────────────────────┘
               │
               ▼
┌─────────────────────────────┐
│    Output vehicle speed profile    │ ── 40
└─────────────────────────────┘
```

Fig. 7

Fig. 8

Fig. 9

Fig. 10

Fig. 11

Fig. 12

Fig. 13

Fig. 14

Fig. 15

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3584135 A1

- CN 111123952 A

**Non-patent literature cited in the description**

- **PARK CHANGHYEON et al.** *Implementation of Autonomous Driving Vehicle at an Intersection with Traffic Light Recognition and Vehicle Controls*
- **K. YOUSIF** ; **A. BAB-HADIASHAR** ; **R. HOSEIN-NEZHAD**. An Overview to Visual Odometry and Visual SLAM: Applications to Mobile Robotics. *Intelligent Industrial Systems*, 2015, vol. 1, 289-311

- **R. DE CHARETTE** ; **F. NASHASHIBI**. *Real Time Visual Traffic Lights Recognition Based on Spot Light Detection and Adaptive Traffic Lights Templates*, 2009